# EUROPÄISCHE PATENTSCHRIFT

(11) **EP 3 303 987 B1**
(45) Veröffentlichungstag und Bekanntmachung des Hinweises auf die Patenterteilung: **12.12.2018**
(21) Anmeldenummer: 16728598.0
(22) Anmeldetag: 25.05.2016
(51) Int. Cl.: G01B 11/26, B21D 5/00

(54) **ELEKTRONISCHE WINKELMESSVORRICHTUNG FÜR EINE BIEGEMASCHINE ZUM MESSEN DES BIEGEWINKELS ZWISCHEN DEN SCHENKELN EINES BLECHS**
ELECTRONIC ANGLE MEASURING DEVICE FOR A BENDING MACHINE FOR MEASURING THE BENDING ANGLE BETWEEN THE LIMBS OF A SHEET
DISPOSITIF GONIOMÉTRIQUE ÉLECTRONIQUE POUR CINTREUSE, PERMETTANT DE MESURER L'ANGLE DE CINTRAGE ENTRE LES CÔTÉS D'UNE TÔLE

(30) Priorität: 28.05.2015 AT 3342015
(43) Veröffentlichungstag der Anmeldung: 11.04.2018
(73) Patentinhaber: KEBA AG, 4041 Linz (AT)
(72) Erfinder: WÖGERBAUER, Johann, 4040 Linz (AT); WÖGERBAUER, Andreas, 4040 Linz (AT)
(74) Vertreter: Patentanwaltskanzlei Hübscher
(86) Internationale Anmeldenummer: PCT/AT2016/050163
(87) Internationale Veröffentlichungsnummer: WO 2016/187638

(56) Entgegenhaltungen:
- WO-A1-2004/090467
- JP-A- 2002 059 217
- US-A1- 2007 058 155
- US-A1- 2015 085 301

## Beschreibung

### Technisches Gebiet

Die Erfindung bezieht sich auf eine elektronisches Winkelmessvorrichtung für eine Biegemaschine zum Messen des Biegewinkels zwischen den Schenkeln eines Blechs mit einem Sensorelement, das berührungslos winkeläquivalente Signale an eine einen Mikroprozessor und eine Speichereinheit aufweisende, mit einer digitalen Anzeige verbundene Signalverarbeitungseinrichtung liefert.

### Stand der Technik

Die Messung des Biegewinkels bei der Blechbiegung ist von wesentlicher Bedeutung, da das Werkstück nach dem Biegeprozess in Abhängigkeit vom Werkstoff, von der Dicke des Blechs, von der Walzrichtung und dgl. nachfedert. Mit dem Einsatz einer effektiven Messvorrichtung kann daher das Biegeergebnis noch in der Maschine kontrolliert bzw. durch einen manuellen oder automatischen Nachbiegevorgang richtiggestellt bzw. verbessert werden, ohne dass das Werkstück aus der Maschine entnommen werden muss. Dies bedeutet, dass die Winkelmessungen in Abhängigkeit von der Senk- und Hubbewegung des Oberwerkzeugs durchgeführt werden sollen, was eine an die Steuerung der Biegemaschine angepasste Steuerung der Messvorrichtung voraussetzt. Die Integration solcher bekannter Messvorrichtungen in eine Biegemaschine und deren maschinenabhängige Steuerung erfordert allerdings eine aufwendige Anpassung der Biegemaschinen durch Sonderkonstruktionen.

Zur berührungslosen Messung des Biegewinkels zwischen den Schenkeln eines in einer Biegemaschine zu biegenden Blechs sind Messvorrichtungen bekannt (DE 43 12 565 C2), die auf einem Lichtschnittverfahren beruhen. Darüber hinaus ist es aber auch bekannt (JP 2002-59217 A), Messvorrichtungen einzusetzen, bei denen der Umstand ausgenützt wird, dass die Strahlungsintensität eines an einem Schenkel des Blechs reflektierten, in Abstrahlrichtung empfangenen Laserstrahls am größten ist, wenn der Laserstrahl senkrecht auf den Blechschenkel auftrifft. Zu diesem Zweck ist im Bereich des Oberwerkzeugs der Biegemaschine ein Spiegel vorgesehen, der um eine zur Scheitelachse des Biegewinkels parallele Achse rotiert und zu dieser Rotationsachse unter 45° geneigt ist, sodass ein in Richtung der Rotationsachse auf den Spiegel auftreffender Laserstrahl in einer zur Rotationsachse senkrechten Ebene auf die Schenkel des zu biegenden Blechs abgelenkt und von den Schenkeln reflektiert wird, und zwar in Abstrahlrichtung, wenn der Laserstrahl senkrecht auf den jeweiligen Schenkel steht. Über die zugehörige Drehstellung des Antriebmotors für den Spiegel kann dann der jeweilige Winkel zwischen den beiden Schenkeln in einer Signalverarbeitungseinrichtung ermittelt werden. Der Nachteil, für den Einsatz einer solchen Messvorrichtung die Biegemaschine konstruktiv anpassen zu müssen, bleibt allerdings bestehen.

### Darstellung der Erfindung

Der Erfindung liegt somit die Aufgabe zugrunde, einfache konstruktive Voraussetzungen zu schaffen, um eine Biegemaschinen mit einem elektronischen Winkelmessgerät zum Messen des Biegewinkels zwischen den Schenkeln eines Blechs auch nachträglich ausrüsten zu können, ohne aufwendige Umrüstungen an der Biegemaschine vornehmen zu müssen.

Die Erfindung löst die gestellte Aufgabe durch die Merkmale des Anspruchs 1.

Da die Messvorrichtung als Winkelmessgerät ausgebildet ist, das die für die Winkelmessung erforderlichen Einrichtungen umfasst, nämlich ein Sensorelement, das berührungslos winkeläquivalente Signale an eine einen Mikroprozessor und eine Speichereinheit aufweisende, mit einer digitalen Anzeige verbundene, ebenfalls im Winkelmessgerät angeordnete Signalverarbeitungseinrichtung liefert, braucht dieses Winkelmessgerät lediglich am Oberwerkzeug der Biegemaschine befestigt zu werden, was keine aufwendige konstruktive Umrüstung der Biegemaschine erfordert. Die Oberwerkzeuge der Biegemaschinen setzen sich üblicherweise aus einzelnen Stempelsegmenten zusammen, die mit einem matrizenartigen Unterwerkzeug zusammenwirken. Für einen Messdurchgriff auf die beiden Schenkel des zu biegenden Blechs ist es daher bloß erforderlich, zwischen zwei Stempelsegmenten einen Messspalt freizulassen und das Winkelmessgerät gegenüber diesem Messspalt auszurichten.

Da das Winkelmessgerät einen an die Signalverarbeitungseinrichtung angeschlossenen, die Senk- und/oder Hebebewegung des Oberwerkzeugs erfassenden Bewegungssensor zum Auslösen des Messvorgangs aufweist, kann das Winkelmessgerät unabhängig von der Maschinensteuerung betrieben werden. Durch den Bewegungssensor wird ja die Bewegung des Oberwerkzeugs durch das Winkelmessgerät selbst erfasst, sodass Winkelmessungen automatisch synchron zu den Arbeitszyklen der Biegemaschine durchgeführt werden können, ohne dass an der Biegemaschine hierfür besondere Vorkehrungen, beispielsweise das Vorsehen von Verkabelungen oder von Schnittstellen zur Maschinensteuerung für den Austausch von Synchronisationssignalen, getroffen werden müssten. Dies gilt für den Einsatz des Winkelmessgeräts sowohl als Maschinenmessgerät als auch als Handmessgerät.

Besonders vorteilhafte Konstruktionsverhältnisse ergeben sich, wenn der Bewegungssensor als mehrachsiger Beschleunigungsgeber ausgebildet ist, weil in diesem Fall mithilfe des mehrachsigen Beschleunigungsgebers eine einfache Ausrichtung des Winkelmessgeräts gegenüber der Scheitelachse des Biegewinkels möglich wird, die ja üblicherweise horizontal verläuft. Die Erfassung der Schwerkraftrichtung aufgrund einer Auswertung der Beschleunigungssignale durch die Signalverarbeitungseinrichtung kann außerdem zur Neigungserfassung und Anzeige des Neigungswinkels genützt werden.

Die Erfassung der Erdbeschleunigung durch den mehrachsigen Beschleunigungsgeber ermöglicht darüber hinaus eine Korrektur des Signals des Beschleunigungsgebers um den auf der Erdbeschleunigung beruhenden Signalanteil, sodass ausschließlich Bewegungsänderungen des Winkelmessgeräts und damit des Oberwerkzeugs erfasst werden. Aus den korrigierten, offsetfreien Beschleunigungswerten lassen sich somit die Geschwindigkeit und der Weg des Oberwerkzeugs für den Start und das Beenden des Messvorgangs ermitteln.

Gegenüber der unmittelbaren Auswertung des zur Beschleunigung proportionalen Signals des Beschleunigungssensors ist die Verwendung des daraus abgeleiteten Wertes der Geschwindigkeit oder des zurückgelegten Weges deshalb vorteilhaft, weil es bei bloßer Betrachtung der Beschleunigung zufolge von heftigen Erschütterungen, wie sie an industriellen Biegemaschinen auftreten können, zu Fehlauslösungen kommen kann. Umgekehrt kann beispielsweise bei elektrisch betriebenen Biegemaschinen die Bewegung mit geringer Beschleunigung eingeleitet werden, sodass ein bloß für die Beschleunigung festgelegter Schwellwert gar nicht überschritten und somit auch kein Messvorgang ausgelöst würde. Bei Biegemaschinen tritt jedoch zumindest beim Anstellen des Oberwerkzeugs aus der Grundstellung in die Arbeitsstellung und beim Rückstellen in die Grundstellung nach dem Biegevorgang eine ausreichend hohe Geschwindigkeit auf, um den Mess- und Biegevorgang zuverlässig synchronisieren zu können. In diesem Zusammenhang ist festzuhalten, dass Winkelmessungen vorteilhaft dann durchgeführt werden, wenn der Biegevorgang abgeschlossen oder nahezu abgeschlossen ist, d.h. knapp vor oder am Beginn der Hebebewegung des Oberwerkzeugs.

Das Signal des Beschleunigungsgebers kann auch dazu benutzt werden, wesentliche Teile des Winkelmessgeräts, insbesondere das Sensorelement, die Anzeige und/oder den Mikroprozessor zu aktivieren bzw. aus einem energiesparenden Ruhemodus in einen aktiven Arbeitsmodus umzuschalten. Dadurch reduziert sich die Zeit der Energieaufnahme im Wesentlichen auf jene kurzen Bewegungsphasen des Oberwerkzeugs, in denen der Biegewinkel tatsächlich gemessen werden kann, wodurch die erforderliche Batterie- bzw. Akkumulatorkapazität und damit einhergehend die Baugröße des Winkelmessgeräts verringert werden kann.

Mithilfe des Beschleunigungsgebers kann das Winkelmessgerät aber auch zwischen einem Maschineneinsatz und einem Handeinsatz umgeschaltet werden. Die am Oberwerkzeug unverändert festliegende Lage des Winkelmessgerätes ist mittels des Beschleunigungssensors einfach vom Einsatz bei manueller Führung unterscheidbar. Mit der automatischen Umschaltung wird die Handhabung vereinfacht und die Gefahr einer Fehlbedienung verringert.

Um an der Biegemaschine keine zusätzlichen Maßnahmen zur Befestigung des Winkelmessgeräts vornehmen zu müssen, kann das Gerätegehäuse in seiner Rückwand einen Permanentmagneten zur Befestigung am Oberwerkzeug aufweisen, was nicht nur vorteilhafte Montagebedingungen schafft, sondern auch die Möglichkeit einer einfachen Nachjustierung des Winkelmessgeräts bezüglich der Scheitelachse des Biegewinkels und des Messspalts mit sich bringt.

Weist die Signalverarbeitungseinrichtung eine Funk-Schnittstelle auf, so entfallen jegliche Verkabelungen, um Daten des Winkelmessgeräts auslesen und beispielsweise der Maschinensteuerung vorgeben zu können oder von außen steuernd auf das Winkelmessgerät zugreifen zu können. In diesem Zusammenhang braucht wohl nicht besonders hervorgehoben zu werden, dass sich für die Energieversorgung Batterien oder Akkumulatoren anbieten, um Kabelanschlüsse zu vermeiden.

Signalisiert die Signalverarbeitungseinrichtung die Über- oder Unterschreitung von programmierbaren Toleranzgrenzen der zu messenden Winkel, so kann in vorteilhafter Weise in den Biegevorgang eingegriffen werden, um die Einhaltung von Toleranzgrenzen sicherzustellen.

Zur Verbesserung der Messwertgenauigkeit, können insbesondere während der Hebebewegung des Oberwerkzeugs Messerte in der Speichereinheit abgelegt werden, sodass diese Messwerte zur Erhöhung der Messwertgenauigkeit durch die Signalverarbeitungseinrichtung nach mathematischen Methoden ausgewertet werden können. Dadurch können insbesondere Nachschwingungsvorgänge erfasst und die zugehörigen Messwerte eliminiert werden. Weiters ermöglicht die Auswertung einer Mehrzahl von Messwerten eine Plausibilisierung des Messergebnisses und eine Beurteilung der Güte bzw. der Zuverlässigkeit des angezeigten Messwerts.

Ein vergleichsweise einfacher Aufbau des Winkelmessgeräts wird dadurch erreicht, dass das Sensorelement einen rotierenden Spiegel zum Ablenken eines Laserstrahls auf die beiden Schenkel des Blechs aufweist und aus dem in Abstrahlrichtung empfangenen Reflexionsstrahl einen Messwert bildet. Zu diesem Zweck weist das Winkelmessgerät einen Lasersender für einen Laserstrahl, einen zwischen den beiden Schenkeln des Blechs angeordneten, zur Scheitelachse des Biegewinkels achsparallelen und kontinuierlich umlaufenden Spiegel mit einer zur Rotationsachse senkrechten Abstrahlrichtung für den Laserstrahl, einen Empfänger für den in Abstrahlrichtung an den Schenkeln reflektierten Laserstrahl und eine an den Empfänger angeschlossenen Signalverarbeitungseinrichtung auf. Der Laserstrahl, der senkrecht zur Rotationsachse des Spiegels auf die Schenkel des Blechs abgelenkt wird, tritt dabei durch einen Messspalt des Oberwerkzeugs hindurch. Dies bringt nicht nur einfache Konstruktionsbedingungen mit sich, sondern macht die Messung auch unabhängig von der Lage des Winkelmessgeräts am Oberwerkzeug.

### Kurze Beschreibung der Zeichnung

In der Zeichnung ist der Erfindungsgegenstand beispielsweise dargestellt. Es zeigen
- Fig. 1: eine Biegemaschine mit einem erfindungsgemäßen digitalen Winkelmessgerät in einer zum Teil aufgerissenen, schematischen Seitenansicht
- Fig. 2: diese Biegemaschine in einem schematischen Vertikalschnitt und
- Fig. 3: das erfindungsgemäße elektronische Winkelmessgerät in einem vereinfachten Blockschaltbild.

### Weg zur Ausführung der Erfindung

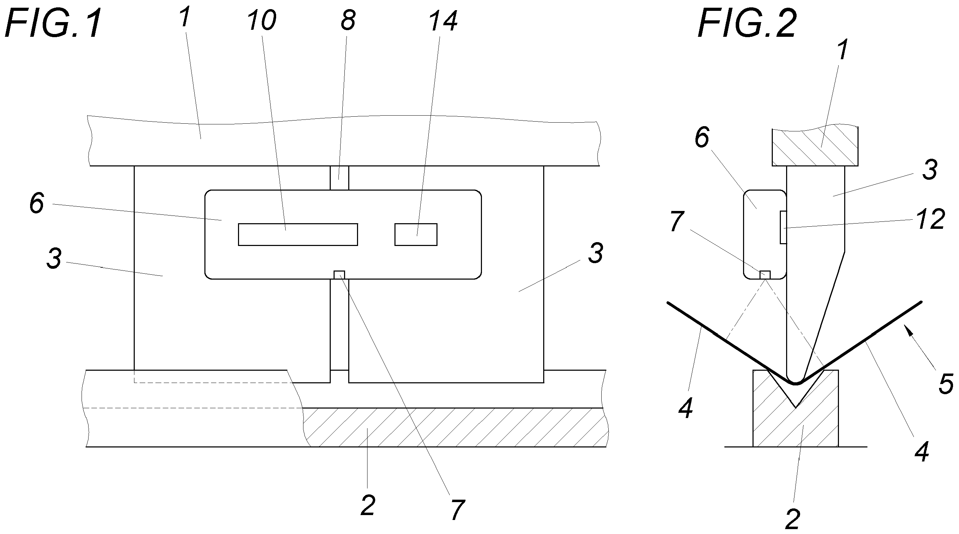

Die dargestellte Biegemaschine weist ein senk- und hebbares Oberwerkzeug 1 auf, das mit einem Unterwerkzeug 2 in Form einer Matrize zusammenwirkt und sich aus nebeneinandergereihten Stempelsegmenten 3 zusammensetzt. Zur Messung des Biegewinkels zwischen den Schenkeln 4 eines zu biegenden Blechs 5 ist am Oberwerkzeug 1 ein digitales Winkelmessgerät 6 befestigt, das ein Sensorelement 7 mit einem Spiegel umfasst, der um eine zur Scheitelachse des Biegewinkels zwischen den beiden Schenkeln 4 des Blechs parallele Rotationsachse gedreht wird und einen Laserstrahl in einer zur Scheitelachse senkrechten Ebene auf die beiden Schenkel 4 ablenkt. Der Laserstrahl tritt dabei durch einen Messspalt 8 zwischen zwei Stempelsegmenten 3 hindurch. Da das Sensorelement 7 einen Empfänger für den in Abstrahlrichtung an den Schenkeln 4 reflektierten Laserstrahl besitzt und die Intensität des reflektierten Laserstrahls am größten ist, wenn der Laserstrahl senkrecht zu den Schenkeln 4 steht, kann die Drehlage des Spiegels für die Laserstrahlen angegeben werden, die senkrecht auf die Schenkel 4 des Blechs 5 stehen, wie dies in der Fig. 2 angedeutet ist. Es lassen sich somit aus diesen Drehstellungen des Spiegels die jeweiligen Biegewinkel zwischen den beiden Schenkeln 4 ableiten.

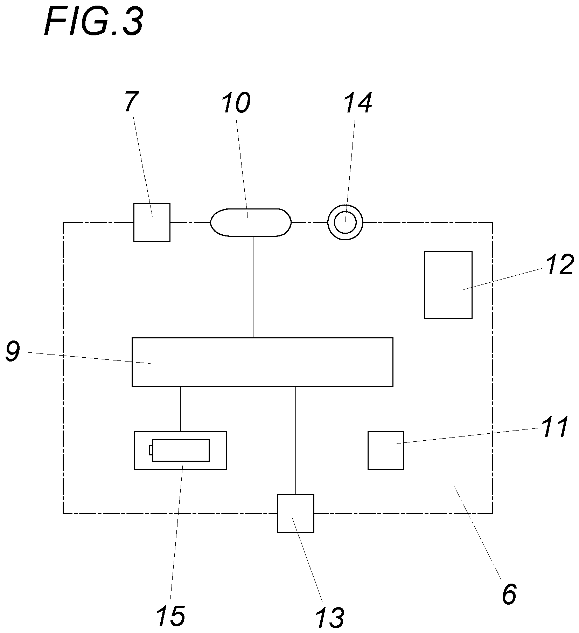

Zu diesem Zweck ist gemäß der Fig. 3 das Sensorelement 7 an eine Signalverarbeitungseinrichtung 9 angeschlossen, die die vom Sensorelement 7 empfangenen Messsignale auswertet und die gemessenen Biegewinkel an eine Anzeige 10 ausgibt. Diese Anzeige 10 ist nicht nur für den Einsatz des Winkelmessgeräts als Handgerät erforderlich, sondern erlaubt es auch beim Einsatz als Maschinenmessgerät, die Biegewinkel und andere angezeigte Daten abzulesen, ohne den Blick maßgeblich vom ohnedies im Blickfeld befindlichen Blech 5 abzuwenden.

Da das Winkelmessgerät 6 über einen an die Signalverarbeitungseinrichtung 9 angeschlossenen Bewegungssensor 11 verfügt, kann über die Erfassung der Bewegung des Oberwerkzeugs 1 die Winkelmessung mit der Bewegung des Oberwerkzeugs 1 synchronisiert werden, ohne auf die Maschinensteuerung zurückgreifen zu müssen. Das elektronische Winkelmessgerät 6 kann somit ohne aufwendige Umrüstarbeiten bei bestehenden Biegemaschinen eingesetzt werden, wenn ein Messdurchgriff des Sensorelements 7 auf die beiden Schenkel 4 des Blechs 5 möglich ist, was bei der üblichen Zusammensetzung des Oberwerkzeugs 1 aus Stempelsegmenten 3 in einfacher Art sichergestellt werden kann. Das Winkelmessgerät 6 ist ja lediglich auf dem Oberwerkzeug 1 entsprechend zu befestigen. Zu diesem Zweck empfiehlt es sich, im Bereich der Gehäuserückwand des Winkelmessgeräts 6 wenigstens einen Permanentmagneten 12 vorzusehen.

Ist der Bewegungssensor 11 als mehrachsiger Beschleunigungsgeber ausgebildet, so kann mittels dessen Signals für die Erdbeschleunigung das Winkelmessgerät 6 in einfacher Art gegenüber der durch die Matrize und die Stempelsegmente 3 vorgegebenen, horizontalen Scheitelachse des Biegewinkels zwischen den beiden Schenkeln 4 ausgerichtet werden. Außerdem wird es möglich, ein hinsichtlich der Erdbeschleunigung korrigiertes Messsignal auszuwerten, sodass ausschließlich Beschleunigungen des Winkelmessgeräts 6 zur Ermittlung der Bewegung des Oberwerkzeugs 1 genützt werden können.

Besonders vorteilhaft für die Bildung genauer Messergebnisse ist die Speicherung von Messwerten während der Hebebewegung des Oberwerkzeugs 1. Durch Messungen auch während der Rückfederung des Blechs 5 nach dem Biegevorgang können Nachschwingvorgänge durch die Signalverarbeitungseinrichtung 9 mithilfe geeigneter mathematischer Verfahren eliminiert und das Endergebnis verbessert werden. Der Messvorgang wird vorzugsweise durch einen Mikroprozessor beendet, der aufgrund einer Analyse der Messwerteschar ein Ende des Biegevorgangs berechnet. Alternativ ist auch eine Beendigung des Messvorgangs nach Ablauf einer festgelegten Zeitspanne oder nach Zurücklegen eines bestimmten aus dem Signal des Bewegungssensors ermittelten Wegs des Oberwerkzeugs möglich.

Weist das Winkelmessgerät 6 eine Funk-Schnittstelle 13 auf, so können Daten nicht nur aus dem Winkelmessgerät 6 kabellos nach außen, sondern auch Daten von außen an das Winkelmessgerät 6 übertragen werden. Um unterschiedliche Betriebsarten für das Winkelmessgerät 6 einstellen zu können, kann das Winkelmessgerät außerdem mit einer Eingabe14 versehen sein. Um von Kabelanschlüssen befreit zu sein, ist das Winkelmessgerät 6 bevorzugt mit Batterien oder Akkumulatoren 15 zur Energieversorgung auszustatten.

## Patentansprüche

1. Elektronische Winkelmessvorrichtung für eine Biegemaschine zum Messen des Biegewinkels zwischen den Schenkeln (4) eines Blechs (5) mit einem Sensorelement (7), das berührungslos winkeläquivalente Signale an eine einen Mikroprozessor und eine Speichereinheit aufweisende, mit einer digitalen Anzeige (10) verbundene Signalverarbeitungseinrichtung (9) liefert, **dadurch gekennzeichnet, dass** das Sensorelement (7), die Signalverarbeitungseinrichtung (9) und die Anzeige (10) ein am Oberwerkzeug (1) der Biegemaschine befestigbares und als Handmessgerät einsetzbares Winkelmessgerät (6) bilden, das einen an die Signalverarbeitungseinrichtung (9) angeschlossenen, die Senk- und/oder Hebebewegung des Oberwerkzeugs (1) erfassenden Bewegungssensor (11) zum Auslösen des Messvorgangs aufweist.

2. Elektronische Winkelmessvorrichtung nach Anspruch 1, **dadurch gekennzeichnet, dass** der Bewegungssensor (11) als mehrachsiger Beschleunigungsgeber ausgebildet ist.

3. Elektronische Winkelmessvorrichtung nach Anspruch 2, **dadurch gekennzeichnet, dass** die Signalverarbeitungseinrichtung (9) das Signal des Beschleunigungsgebers um den auf der Erdbeschleunigung beruhenden Signalanteil korrigiert.

4. Elektronische Winkelmessvorrichtung nach einem der Ansprüche 1 bis 3, **dadurch gekennzeichnet, dass** das Gerätegehäuse in seiner Rückwand wenigstens einen Permanentmagneten (12) zur Befestigung am Oberwerkzeug (1) aufweist.

5. Elektronische Winkelmessvorrichtung nach einem der Ansprüche 1 bis 4, **dadurch gekennzeichnet, dass** die Signalverarbeitungseinrichtung (9) eine Funk-Schnittstelle (13) aufweist.

6. Elektronische Winkelmessvorrichtung nach einem der Ansprüche 1 bis 5, **dadurch gekennzeichnet, dass** die Signalverarbeitungseinrichtung (9) die Über- oder Unterschreitung von programmierbaren Toleranzgrenzen der zu messenden Winkel signalisiert.

7. Elektronische Winkelmessvorrichtung nach einem der Ansprüche 1 bis 6, **dadurch gekennzeichnet, dass** die Signalverarbeitungseinrichtung (9) während der Senk- und Hebebewegung des Oberwerkzeugs (1) in der Speichereinheit abgelegte Messwerte zur Erhöhung der Messwertgenauigkeit nach mathematischen Methoden auswertet.

8. Elektronische Winkelmessvorrichtung nach einem der Ansprüche 1 bis 7, **dadurch gekennzeichnet, dass** das Sensorelement (7) einen rotierenden Spiegel zum Ablenken eines Laserstrahls auf die beiden Schenkel (4) des Blechs (5) aufweist und aus dem in Abstrahlrichtung empfangenen Reflexionsstrahl einen Messwert bildet.

## Claims

1. Electronic angle measuring apparatus for a bending machine for measuring the bending angle between the limbs (4) of a metal sheet (5), having a sensor element (7) which contactlessly delivers angle-equivalent signals to a signal processing device (9) which comprises a microprocessor and a memory unit and is connected to a digital display (10), **characterised in that** the sensor element (7), the signal processing device (9) and the display (10) form an angle measuring device (6) which can be fastened to the upper tool (1) of the bending machine, can be used as a hand-held measuring device and comprises a motion sensor (11) - connected to the signal processing device (9) and detecting the lowering and/or raising movement of the upper tool (1) - for triggering the measuring procedure.

2. Electronic angle measuring apparatus as claimed in claim 1, **characterised in that** the motion sensor (11) is designed as a multi-axis accelerometer.

3. Electronic angle measuring apparatus as claimed in claim 2, **characterised in that** the signal processing device (9) corrects the signal of the accelerometer by the signal component based on the acceleration of gravity.

4. Electronic angle measuring apparatus as claimed in any one of claims 1 to 3, **characterised in that** the device housing comprises, in its rear wall, at least one permanent magnet (12) for fastening on the upper tool (1).

5. Electronic angle measuring apparatus as claimed in any one of claims 1 to 4, **characterised in that** the signal processing device (9) has a radio interface (13).

6. Electronic angle measuring apparatus as claimed in any one of claims 1 to 5, **characterised in that** the signal processing device (9) signals whether the angles to be measured are above or below programmable tolerance limits.

7. Electronic angle measuring apparatus as claimed in any one of claims 1 to 6, **characterised in that** the signal processing device (9) evaluates measurement values stored in the memory unit during the lowering and raising movement of the upper tool (1), in order to increase measurement accuracy according to mathematical methods.

8. Electronic angle measuring apparatus as claimed in any one of claims 1 to 7, **characterised in that** the sensor element (7) comprises a rotating mirror for deflecting a laser beam onto the two limbs (4) of the metal sheet (5) and forms a measurement value from the reflection beam received in the direction of beam.

## Revendications

1. Dispositif goniométrique électronique pour une cintreuse, permettant de mesurer l'angle de cintrage entre les côtés (4) d'une tôle (5), comprenant un élément de détection (7) qui fournit des signaux de représentation d'angle sans contact à un dispositif de traitement de signal (9) qui présente un microprocesseur et une unité mémoire et qui est relié à un affichage numérique (10), **caractérisé en ce que** l'élément de détection (7), le dispositif de traitement de signal (9) et l'affichage (10) forment un appareil goniométrique (6) qui peut être fixé sur l'outil supérieur (1) de la cintreuse et peut être utilisé comme appareil de mesure manuelle, qui présente un capteur de mouvement (11) raccordé au dispositif de traitement de signal (9) et détectant le mouvement d'abaissement et/ou d'élévation de l'outil supérieur (1), pour déclencher le processus de mesure.

2. Dispositif goniométrique électronique selon la revendication 1, **caractérisé en ce que** le capteur de mouvement (11) est réalisé en tant qu'accéléromètre multiaxe.

3. Dispositif goniométrique électronique selon la revendication 2, **caractérisé en ce que** le dispositif de traitement de signal (9) corrige le signal de l'accéléromètre de la part de signal reposant sur l'accélération terrestre.

4. Dispositif goniométrique électronique selon l'une des revendications 1 à 3, **caractérisé en ce que** le boitier de l'appareil comporte dans sa paroi arrière au moins un aimant permanent (12) pour fixation au niveau de l'outil supérieur (1).

5. Dispositif goniométrique électronique selon l'une des revendications 1 à 4, **caractérisé en ce que** le dispositif de traitement de signal (9) comporte une interface radio (13).

6. Dispositif goniométrique électronique selon l'une des revendications 1 à 5, **caractérisé en ce que** le dispositif de traitement de signal (9) signalise le franchissement à la hausse ou à la baisse des limites de tolérance pouvant être programmées de l'angle à mesurer.

7. Dispositif goniométrique électronique selon l'une des revendications 1 à 6, **caractérisé en ce que** le dispositif de traitement de signal (9) évalue, pendant le mouvement d'abaissement et d'élévation de l'outil supérieur (1), les valeurs de mesure enregistrées dans l'unité de mémoire pour augmenter la précision de la valeur de mesure suivant des méthodes mathématiques.

8. Dispositif goniométrique électronique selon l'une des revendications 1 à 7, **caractérisé en ce que** l'élément de détection (7) comporte un miroir rotatif pour dévier un rayon laser sur les deux cotés (4) de la tôle (5) et forme à partir du rayon de réflexion reçu dans la direction de rayonnement, une valeur de mesure.
